# EUROPÄISCHE PATENTSCHRIFT

(11) **EP 0 818 139 B1**
(45) Veröffentlichungstag und Bekanntmachung des Hinweises auf die Patenterteilung: **24.10.2001**
(21) Anmeldenummer: 97110859.2
(22) Anmeldetag: 01.07.1997
(51) Int. Cl.: A01J 25/11

(54) **Verfahren und Vorrichtung zur Gewinnung von Käsemasse**
Process and device for obtaining curd
Procédé et dispositif d'obtention de caillé

(30) Priorität: 10.07.1996 DE 19627837
(43) Veröffentlichungstag der Anmeldung: 14.01.1998
(73) Patentinhaber: ALPMA Alpenland Maschinenbau GmbH, 83543 Rott am Inn (DE)
(72) Erfinder: Hain, Gottfried, 83539 Pfaffing (DE); Dürmeier, Siegfried, 84556 Kastl (DE); Stacheter, Johann, 83052 Bruckmühl (DE)
(74) Vertreter: Finsterwald, Martin, Dr.

(56) Entgegenhaltungen:
- EP-A- 0 761 092
- DE-A- 2 406 616
- DE-A- 2 451 617

## Beschreibung

Die Erfindung betrifft ein Verfahren zur in einem langgestreckten Trog mit kontinuierlich bewegter Innenwand erfolgenden Gewinnung von Käsemasse aus Milch, bei dem zumindest der Koagulationsvorgang in voneinander abgetrennten, in Troglängsrichtung bewegten, aufeinanderfolgenden Zellen stattfindet, die durch den Koagulationsvorgang gebildete Gallerte anschließend geschnitten wird, und nach dem Schneiden zumindest ein weiterer, auf die geschnittene Gallerte bzw. den Käsebruch einwirkender Arbeitsschritt ausgeführt wird. Weiterhin betrifft die Erfindung eine Vorrichtung zur Durchführung eines solchen Verfahrens.

Die Aufteilung des langgestreckten Trogs in einzelne, aufeinanderfolgende Zellen dient zum einen dazu, in einem Einfüllbereich des Trogs jeweils Beruhigungsräume für die eingefüllte Milch zu bilden, zum anderen ermöglicht die genannte Zelleinteilung jedoch auch die Herstellung von unterschiedlichen Käsesorten in aufeinanderfolgenden, insbesondere direkt aufeinanderfolgenden Zellen.

Aus der EP-A-0 761 092 ist es bekannt, Trennwände zur Abgrenzung der einzelnen Zellen voneinander zu verwenden, die vor dem die Erzeugung von Käsebruch bewirkenden Schneidvorgang aus dem Trog herausbewegt werden, wodurch die Zelleinteilung aufgelöst wird. Für die Vertragsstaaten DE,DK,FR,IT, stellt diese Anmeldung einen Stand der Technik nach Artikel 54(3) EPÜ der.

Nachteilig an den bekannten Vorrichtungen und Verfahren ist die Tatsache, daß bei einem weiteren, nach dem Schneidvorgang stattfindenden Arbeitsschritt, insbesondere einem Rühren des Käsebruchs, eine Vermischung von aus unterschiedlichen Zellen stammendem Käsebruch erfolgt, was insbesondere bei einem Sortenwechsel problematisch ist.

Eine Aufgabe der Erfindung besteht darin, ein Verfahren der eingangs genannten Art derart weiterzubilden, daß während der gesamten, im langgestreckten Trog erfolgenden Gewinnung der Käsemasse keine Vermischung von innerhalb des Trogs aufeinanderfolgenden Sorten stattfinden kann.

Erfindungsgemäß wird diese Aufgabe dadurch gelöst, daß auch der weitere Arbeitsschritt, insbesondere das Rühren, innerhalb von in Troglängsrichtung aufeinanderfolgenden Zellen stattfindet.

Da erfindungsgemäß also auch während des weiteren, nach dem Schneiden stattfindenden Arbeitsschritts die Zelleinteilung aufrechterhalten oder zumindest wieder hergestellt wird, kann sichergestellt werden, daß innerhalb des Trogs aufeinanderfolgende Sorten während des gesamten Herstellungsprozesses sauber voneinander getrennt bleiben. Auf diese Weise kann die Erzeugung von aus einer Mischung unterschiedlicher Käsesorten bestehendem Ausschuß vollständig vermieden oder zumindest weitgehend reduziert werden.

Eine besonders exakte Trennung aufeinanderfolgender Käsesorten läßt sich bei einer bevorzugten Ausbildung des erfindungsgemäßen Verfahrens dadurch erreichen, daß die Trennwände, die die einzelnen Zellen voneinander abgrenzen, vor und nach dem Schneiden die gleiche Relativposition zur im Trog bewegten Milch/Gallerte besitzen. Dies läßt sich zum einen natürlich dadurch erreichen, daß die Trennwände über die gesamte Troglänge im Trog verbleiben; zum anderen können die Trennwände jedoch auch vor dem Schneidvorgang aus dem Trog herausbewegt und nach dem Schneidvorgang wieder an derjenigen Stelle eingesetzt werden, an der sie sich befinden würden, wenn sie vor dem Schneidvorgang nicht aus dem Trog herausbewegt, sondern mit der Milch/Gallerte mittransportiert worden wären.

Erfindungsgemäß ist es möglich, während des weiteren Arbeitsschritts entweder alle vor dem Schneiden vorhandene Zelleinteilungen aufrechtzuerhalten oder nur diejenigen Trennwände bzw. diejenige Trennwand im Käsebruch zu belassen, die sich beispielsweise zwischen zwei aufeinanderfolgenden unterschiedlichen Sorten befinden. In letztgenanntem Fall wird die während des weiteren Arbeitsschritts erfolgende Durchmischung von aus unterschiedlichen Zellen stammendem Käsebruch akzeptiert, sofern sich in den genannten Zellen lediglich Käsebruch einer Käsesorte befindet. Der zu unterschiedlichen Käsesorten gehörende Käsebruch kann jedoch auch während des weiteren Arbeitsschritts aufgrund der vorhandenen Trennwände nicht auf unerwünschte Weise miteinander vermischt werden.

Es wurde bereits erwähnt, daß es bei einer Ausführungsform der Erfindung möglich ist, alle vor dem Schneiden vorhandenen Zelleinteilungen auch während des Schneidens aufrecht zu erhalten. Um in diesem Fall eine Kollision von im Trog befindlichen Schneidwerkzeugen mit in Transportrichtung bewegten Trennwänden zu vermeiden, kann vor dem Vorbeilaufen von Trennwänden an den Schneidwerkzeugen dafür gesorgt werden, daß die Schneidwerkzeuge aus dem Trog herausbewegt, insbesondere herausgeschwenkt werden.

Bei während des Schneidens aufrecht erhaltener Zelleinteilung ist auch während des Schneidens absolut sichergestellt, daß keine Vermischung von Gallerte/Käsebruch aus aufeinanderfolgenden Zellen stattfindet.

Bei der letztgenannten Ausführungsform der Erfindung ist es jedoch problematisch, die Trennwände so nahe an die Schneidwerkzeuge heranzuführen, daß die in einer Zelle befindliche Gallerte vollständig geschnitten bzw. zu Käsebruch verarbeitet wird.

Um das genannte Problem zu umgehen, wird gemäß einer besonders bevorzugten Ausführungsform der Erfindung vorgeschlagen, die vor dem Schneiden vorhandenen Zelleinteilungen während des Schneidens aufzulösen, wobei natürlich dafür gesorgt wird, daß zumindest einige, vorzugsweise alle Zelleinteilungen nach dem Schneiden für die Durchführung des weiteren Arbeitsschritts wieder hergestellt werden.

Von Vorteil ist es, wenn während des Schneidens die Zelleinteilungen zwischen zwei, drei oder vier aufeinanderfolgenden Zellen aufgelöst werden. So wird ein in Troglängsrichtung ausreichende Abmessungen aufweisender Schneidbereich geschaffen, in dem ein insbesondere kontinuierlich erfolgender Schneidvorgang stattfinden kann. Hierbei können zumindest diejenigen Schneidwerkzeuge, die Schnitte in Troglängsrichtung bewirken, während der gesamten Käsemassengewinnung im Trog verbleiben, da die Gallerte aufgrund der im Schneidbereich entnommenen Trennwände ungehindert durch die genannten Schneidwerkzeuge hindurchbewegt werden kann.

Wenn die Zelleinteilung folglich während des Schneidvorgangs aufgelöst wird, kann sichergestellt werden, daß die in Längsrichtung verlaufenden Schnitte problemlos und vollständig in das gesamte Volumen der zu schneidenden Gallerte eingebracht werden können, da das Problem des nahe im Bereich von Trennwänden erfolgenden Schneidvorgangs umgangen und somit vollständig beseitigt wird.

Der weitere Arbeitsschritt, während dessen bevorzugt alle, zumindest jedoch einige Trennwände im Trog verbleiben, kann beispielsweise ein Rühren, Aufheizen und/oder Abkühlen des geschnittenen Käsebruchs umfassen.

Bevorzugt ist es, wenn der Austrag der Käsemasse nach Durchführung des weiteren Arbeitsschritts über ein Austragsrohr erfolgt. Im Vergleich zu einem über einen Naßsumpf erfolgenden Austrag läßt sich bei Verwendung eines Austragsrohrs erreichen, daß aufeinanderfolgende Käsesorten auch während des Austragsvorgangs voneinander getrennt bleiben. Bei Verwendung eines Naßsumpfes könnte sich auf nachteilige Weise während des Austrags noch eine Vermischung aufeinanderfolgender Käsesorten ergeben.

Es wird jedoch ausdrücklich darauf hingewiesen, daß im Rahmen der Erfindung sowohl mit einem Austragsrohr als auch mit einem Naßsumpf gearbeitet werden kann.

Bei einer Vorrichtung zur Durchführung des erfindungsgemäßen Verfahrens folgen in Troglängsrichtung aufeinander zumindest ein Einfüllabschnitt, ein Koagulationsabschnitt, ein Schneidabschnitt, ein Weiterbearbeitungsabschnitt und ein Austragsabschnitt. Um die Zelleinteilung auch während des Weiterbearbeitungsabschnitts aufrechterhalten zu können, wird bei einer Vorrichtung zur Durchführung des erfindungsgemäßen Verfahrens am in Transportrichtung hinteren Ende des Weiterbearbeitungsabschnitts eine Entnahmevorrichtung für durch den Weiterbearbeitungsabschnitt transportierte Trennwände vorgesehen.

Die entnommenen Trennwände können dann entgegen der eigentlichen Transportrichtung - vorzugsweise unter Zwischenschaltung einer Reinigungseinrichtung - zum Einfüllbereich des Trogs zurücktransportiert werden, wo sie wiederum in den Trog zur Bildung eines Beruhigungsraums für eingefüllte Milch eingesetzt werden.

Da es erfindungsgemäß bevorzugt ist, die Zelleinteilung während des Schneidvorgangs, also innerhalb des Schneidabschnitts aufzulösen, kann am in Transportrichtung vorderen Ende des Schneidabschnitts eine Entnahmevorrichtung und am in Transportrichtung hinteren Ende des Schneidabschnitts eine Einsetzvorrichtung für Trennwände vorgesehen werden.

Dabei ist es vorteilhaft, wenn im Bereich des Schneidabschnitts eine Trennwandtransporteinrichtung angeordnet ist, die die vor dem Schneidvorgang entnommenen Trennwände außerhalb, insbesondere oberhalb des Trogs weitertransportiert.

Vorzugsweise ist in diesem Fall die Transportgeschwindigkeit der Trennwandtransporteinrichtung höher als die Transportgeschwindigkeit der Gallerte bzw. des Käsebruchs im Schneidabschnitt. Mit einem derartigen Geschwindigkeitsverhältnis wird erreicht, daß die Trennwände nach dem Schneidvorgang an genau derjenigen Relativposition zur im Trog bewegten Milch/Gallerte eingesetzt werden können, an der sie vor dem Schneidvorgang entnommen wurden, da aufgrund der im Schneidabschnitt erhöhten Transportgeschwindigkeit ausreichend Zeit für den Entnahme- und Einsetzvorgang zur Verfügung steht.
Auf die genannte Weise wird eine exakte Trennung aufeinanderfolgender Käsesorten mit Sicherheit gewährleistet.

Wirtschaftlich sinnvoll ist es, wenn die am in Transportrichtung vorderen Ende des Schneidabschnitts gelegene Entnahmevorrichtung, die am in Transportrichtung hinteren Ende des Schneidabschnitts gelegene Einsetzvorrichtung sowie die im Bereich des Schneidabschnitts vorgesehene Trennwandtransporteinrichtung zum außerhalb des Trogs in Käsemassentransportrichtung erfolgenden Transport der Trennwände zu einer einzigen Station zusammengefaßt werden.

Die Auflösung der Zelleinteilung während des Schneidvorgangs stellt keinen gravierenden Nachteil dar, da der Schneidvorgang in der Regel keine oder nur eine sehr geringe Durchmischung der im Trog befindlichen Käsemasse bewirkt.

Für den Fall, daß der Weiterbearbeitungsabschnitt beispielsweise als Rührwerk ausgebildet wird, ist es von Vorteil, wenn das oder die Rührelemente des Rührwerks beheizbar oder kühlbar ausgeführt werden. Auf diese Weise wirkt das Rührelement in effizienter Weise gleichzeitig als Heiz- oder Kühlelement.

Die Längserstreckung des Schneidabschnitts kann beispielsweise zwischen 50 und 300 cm, insbesondere in etwa 150 cm betragen. Die Abmessung der Zellen in Troglängsrichtung kann beispielsweise jeweils ungefähr zwischen 60 und 100 cm betragen.

Weitere bevorzugte Ausführungsformen der Erfindung sind in den Unteransprüchen angegeben.

Die Erfindung wird nachfolgend anhand von Ausführungsbeispielen unter Bezugnahme auf die Zeichnungen beschrieben; in diesen zeigen:
- Fig. 1: die perspektivische Gesamtansicht einer ersten Ausführungsform einer erfindungsgemäßen Vorrichtung und
- Fig. 2: die perspektivische Gesamtansicht einer zweiten Ausführungsform einer erfindungsgemäßen Vorrichtung.

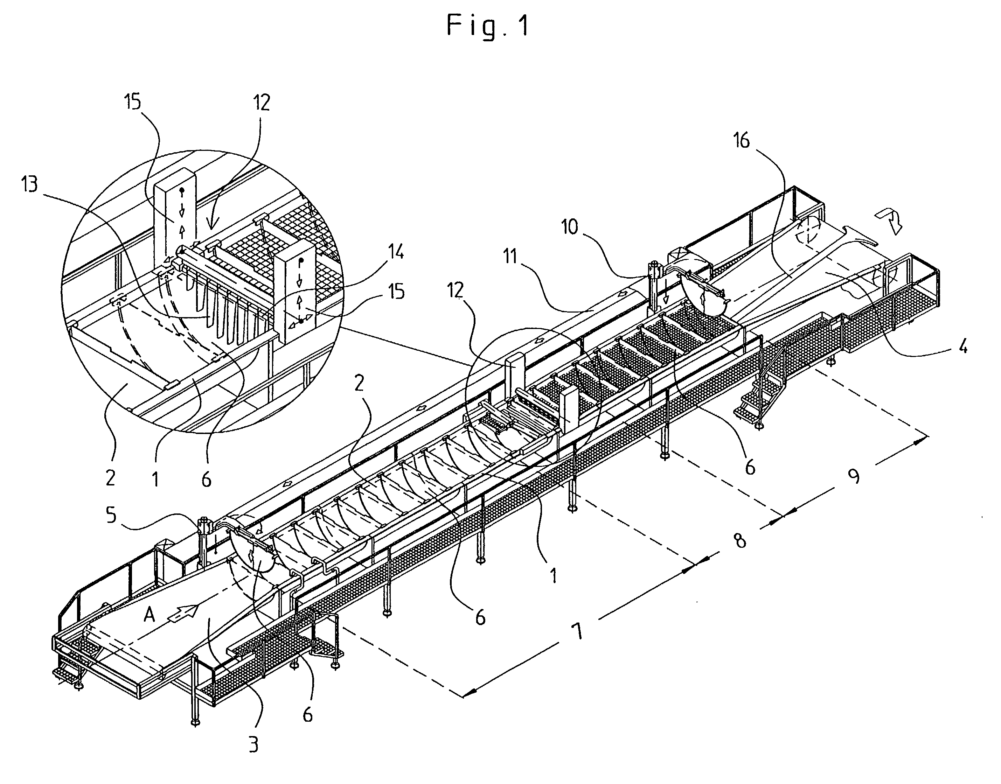

Fig. 1 zeigt die schematische Darstellung eines im Querschnitt halbkreisförmigen Trogs 1, der beispielsweise aus einer metallischen Wanne besteht. Die Troginnenwand 2 ist aus einem in Transportrichtung umlaufenden, gemuldeten Endlosband gebildet, so daß bei einem Antrieb dieses Endlosbandes der Troginhalt in Richtung des Pfeiles A vorwärts transportiert wird, ohne daß eine Relativbewegung zwischen Troginhalt und Troginnenwand 2 stattfindet. So wird sichergestellt, daß im Troginhalt keine unerwünschten, den Koagulationsvorgang beeinträchtigenden Turbulenzen auftreten.

An seinem einen Ende ist der Trog 1 mit einem Einfüllbereich 3 und an seinem anderen Ende mit einem Austragsbereich 4 versehen. Im Einfüllbereich 3 ist eine Einsetzeinrichtung 5 zum Einsetzen von Trennwänden 6 in den Trog 1 vorgesehen. Die in den Trog 1 eingesetzten Trennwände 6 werden mit der Troginnenwand 2 auf geeignete Weise verbunden, so daß sich eine Zelleinteilung mit in Troglängsrichtung aufeinanderfolgenden, gegeneinander abgedichteten Zellen ergibt.

In Troglängsrichtung folgen aufeinander ein Beruhigungs- und Koagulationsabschnitt 7, ein Schneidabschnitt 8 und ein Weiterbearbeitungsabschnitt 9, an welchen sich der Austragsabschnitt 4 anschließt.

Am Ende des Weiterbearbeitungsabschnitts 9 ist eine Entnahmevorrichtung 10 vorgesehen, mittels welcher die Trennwände 6 aus dem Trog 1 entnommen werden können.

Neben dem Trog 1 erstreckt sich parallel zu dessen Längsachse eine Rücktransportvorrichtung 11 für von der Entnahmevorrichtung 10 entnommene und von der Einsetzeinrichtung 5 wiederum einzusetzende Trennwände 6. Die Rücktransportvorrichtung 11 ist dabei so ausgebildet, daß sich die entgegen der Transportrichtung rückgeförderten Trennwände 6 vertikal und parallel zur Längsrichtung des Trogs 1 erstrecken. In der Rücktransportvorrichtung 11 ist eine in Fig. 1 nicht dargestellte Wascheinrichtung für die Trennwände 6 vorgesehen, welche während des Rücktransportvorgangs einen Reinigungsvorgang bewirkt.

Im Schneidbereich 8 ist eine aus der in Fig. 1 enthaltenen Detailansicht gut erkennbare Schneideinrichtung 12 vorgesehen, mit der die am Ende des Koagulationsabschnitts 7 nicht mehr fließfähige Käsemasse zu Käsebruch schneidbar ist.

Der in der Detailansicht der Fig. 1 gezeichnete Bereich der Schneideinrichtung 12 zeigt einen Teil derjenigen Schneidelemente 13, die in Troglängsrichtung verlaufende Schnitte bewirken. Diese Schneidelemente 13 erstrecken sich senkrecht nach unten in das Troginnere und sind an einem gemeinsamen Führungselement 14 gehalten. Das Führungselement 14 ist gemeinsam mit den Schneidelementen 13 entlang zweier beiderseits des Trogs 1 angeordneter Vertikalträger 15 in Vertikalrichtung bewegbar, so daß immer dann, wenn eine Trennwand 6 unmittelbar benachbart den Schneidelementen 13 zu liegen kommt, die Schneidwerkzeuge 13 aus dem Trog 1 herausbewegt werden können, um so einen ungehinderten Weitertransport der betreffenden Trennwand 6 zu ermöglichen.

Bei der in Fig. 1 dargestellten Ausführungsform wird also mittels der Schneidelemente 13 immer die innerhalb einer Zelle vorhandene Gallerte zu Käsebruch verarbeitet, woraufhin die Schneidelemente 13 vertikal nach oben aus der Zelle herausbewegt und in die nächste Zelle eingesetzt werden. Pro an der Schneideinrichtung vorbeilaufender Trennwand 6 erfolgt folglich ein Herausbewegen und ein anschließendes Wiedereinsetzen der Schneidelemente 13.

An den Schneidabschnitt 8 schließt sich der Weiterbearbeitungsabschnitt 9 an, innerhalb dessen die Trennwände 6 weiterhin im Trog verbleiben, so daß auf erfindungsgemäße Weise die Zelleinteilung auch innerhalb des Weiterbearbeitungsabschnitts 9 aufrechterhalten bleibt. Erst am Ende des Weiterbearbeitungsabschnitts 9 werden die Trennwände 6 mittels der Entnahmevorrichtung 10 aus dem Trog 1 entnommen.

An den Weiterbearbeitungsabschnitt 9 schließt sich der Austragsbereich 4 an, in welchem ein Austragsrohr 16 angeordnet ist, durch das die erzeugte Käsemasse ausgetragen wird. Durch die Verwendung des Austragsrohrs 16 kann sichergestellt werden, daß auch beim Austrag keine Durchmischung aufeinanderfolgender Käsesorten stattfindet.

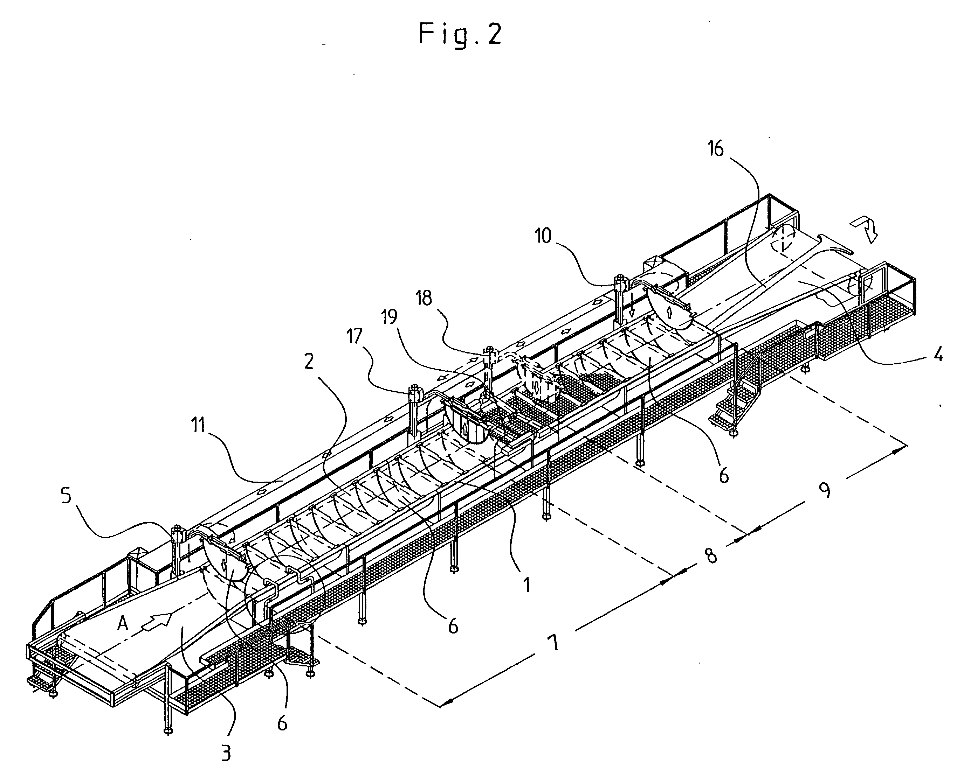

Fig. 2 zeigt eine weitere Ausführungsform einer erfindungsgemäßen Vorrichtung, wobei für diejenigen Elemente der Vorrichtung, die auch bei der Ausführungsform gemäß Fig. 1 vorhanden sind, entsprechende Bezugszeichen gewählt wurden.

Der Unterschied zur Ausführungsform gemäß Fig. 1 besteht darin, daß zusätzlich zur Einsetzeinrichtung 5 und zur Entnahmevorrichtung 10 auch noch eine Entnahme- und Einsetzvorrichtung 17, 18 für Trennwände 6 vorgesehen ist, die von einer am in Transportrichtung vorderen Ende des Schneidabschnitts 8 gelegenen Entnahmeposition 17 in eine am in Transportrichtung hinteren Ende des Schneidabschnitts 8 gelegene Einsetzposition 18 verfahrbar ist.

Die Vorrichtung 17, 18 bewirkt, daß in demjenigen Bereich des Trogs 1, in dem die Gallerte bzw. der Käsebruch den Schneidabschnitt 8 durchläuft, keine Trennwände 6 in den Trog 1 eingesetzt sind. Dies ermöglicht, daß zumindest diejenigen Schneidelemente 19, die Schnitte in Troglängsrichtung bewirken, während der gesamten Käsemassengewinnung im Trog 1 verbleiben können, so daß ein kontinuierlicher Schneidvorgang ausgeführt werden kann. Die Schneidelemente 19 können deshalb im Trog verbleiben, da keine in den Trog 1 eingesetzten Trennwände 6 mit dem im Schneidabschnitt 8 angeordneten Schneidelementen 19 kollidieren können.

Die Trennwände 6 werden im Bereich des Schneidabschnitts 6 mittels der auch als Trennwandtransporteinrichtung wirkenden Entnahme- und Einsetzvorrichtung 17, 18 außerhalb des Trogs in Transportrichtung der Käsemasse bewegt. Dabei ist die Transportgeschwindigkeit der Trennwandtransporteinrichtung höher als die Transportgeschwindigkeit der Gallerte bzw. des Käsebruchs im Schneidabschnitt 8. Durch dieses Geschwindigkeitsverhältnis kann sichergestellt werden, daß die vor dem Schneidabschnitt 8 entnommenen Trennwände 6 wieder an exakt der gleichen Relativposition zur Gallerte bzw. zum Käsebruch mittels der Entnahme- und Einsetzvorrichtung 17, 18 eingesetzt werden können, an der sie mittels der Entnahme- und Einsetzvorrichtung 17, 18 entnommen wurden.

Die Erfindung ist nicht auf die vorstehend beschriebenen Ausführungsbeispiele beschränkt. Es lassen sich im Rahmen der Patentansprüche eine Vielzahl von weiteren Ausführungsbeispielen realisieren.

### Bezugszeichenliste

- 1: Trog
- 2: Troginnenwand
- 3: Einfüllbereich
- 4: Austragsbereich
- 5: Einsetzeinrichtung
- 6: Trennwände
- 7: Beruhigungs- und Koagulationsabschnitt
- 8: Schneidabschnitt
- 9: Weiterbearbeitungsabschnitt
- 10: Entnahmevorrichtung
- 11: Rücktransportvorrichtung
- 12: Schneideinrichtung
- 13: Schneidelemente
- 14: Führungselement
- 15: Vertikalträger
- 16: Austragsrohr
- 17: Entnahme- und Einsetzvorrichtung (Entnahmeposition)
- 18: Entnahme- und Einsetzvorrichtung (Einsetzposition)
- 19: Schneidelemente

## Patentansprüche

1. Verfahren zur in einem langgestreckten Trog (1) mit kontinuierlich bewegter Innenwand erfolgenden Gewinnung von Käsemasse aus Milch, bei dem zumindest der Koagulationsvorgang in voneinander abgetrennten, in Troglängsrichtung bewegten, aufeinanderfolgenden Zellen stattfindet, die durch den Koagulationsvorgang gebildete Gallerte anschließend geschnitten wird, und nach dem Schneiden zumindest ein weiterer, auf die geschnittene Gallerte bzw. den Käsebruch einwirkender Arbeitsschritt ausgeführt wird, der innerhalb von in Troglängsrichtung aufeinanderfolgenden Zellen stattfindet.

2. Verfahren nach Anspruch 1,
**dadurch gekennzeichnet,**
**daß** die Zellen voneinander abgrenzende Trennwände (6) vor und nach dem Schneiden die gleiche Relativposition zur im Trog (1) bewegten Milch/Gallerte besitzen, und/oder daß während des weiteren Arbeitsschritts alle vor dem Schneiden vorhandene Zelleinteilungen aufrechterhalten werden.

3. Verfahren nach einem der vorhergehenden Ansprüche,
**dadurch gekennzeichnet,**
**daß** alle vor dem Schneiden vorhandene Zelleinteilungen auch während des Schneidens aufrechterhalten werden, wobei insbesondere vor dem Vorbeilaufen von Trennwänden (6) an Schneidwerkzeugen (13) letztere aus dem Trog (1) herausbewegt, insbesondere herausgeschwenkt werden.

4. Verfahren nach einem der Ansprüche 1 oder 2,
**dadurch gekennzeichnet,**
**daß** die vor dem Schneiden vorhandenen Zelleinteilungen während des Schneidens aufgelöst werden, wobei insbesondere während des Schneidens die Zelleinteilungen zwischen zwei, drei oder vier aufeinanderfolgenden Zellen aufgelöst werden.

5. Verfahren nach Anspruch 4,
**dadurch gekennzeichnet,**
**daß** der Schneidvorgang kontinuierlich erfolgt, und/oder daß zumindest die Schnitte in Troglängsrichtung bewirkenden Schneidwerkzeuge (19) während der gesamten Käsemassengewinnung im Trog (1) verbleiben.

6. Verfahren nach einem der vorhergehenden Ansprüche,
**dadurch gekennzeichnet,**
**daß** während des weiteren Arbeitsschritts ein Rühren, Aufheizen und/oder Abkühlen des Käsebruchs erfolgt, und/oder daß der Austrag der Käsemasse über ein Austragsrohr (16) erfolgt.

7. Vorrichtung zum kontinuierlichen Gewinnen von Käsemasse aus Milch mit einem langgestreckten Trog (1) mit kontinuierlich bewegter Innenwand, der mittels Trennwänden (6) in voneinander abgetrennte, in Troglängsrichtung bewegte, aufeinanderfolgende Zellen unterteilt ist, wobei in Troglängsrichtung zumindest ein Einfüllabschnitt (3), ein Koagulationsabschnitt (7), ein Schneidabschnitt (8), ein Weiterbearbeitungsabschnitt (9) und ein Austragsabschnitt (4) aufeinanderfolgen, wobei am in Transportrichtung hinteren Ende des Weiterbearbeitungsabschnitts (9) eine Entnahmevorrichtung (10) für durch den Weiterbearbeitungsabschnitt (9) transportierte Trennwände (6) vorgesehen ist.

8. Vorrichtung nach Anspruch 7,
**dadurch gekennzeichnet,**
**daß** am in Transportrichtung vorderen Ende des Schneidabschnitts (8) eine Entnahmevorrichtung (17, 18) und am in Transportrichtung hinteren Ende des Schneidabschnitts (8) eine Einsetzvorrichtung (17, 18) für Trennwände (6) vorgesehen ist, und/oder daß im Bereich des Schneidabschnitts (8) eine Trennwandtransporteinrichtung (17, 18) zum außerhalb des Trogs (1) in Käsemassentransportrichtung erfolgenden Transport der Trennwände (6) vorgesehen ist.

9. Vorrichtung nach Anspruch 8,
**dadurch gekennzeichnet,**
**daß** die Transportgeschwindigkeit der Trennwandtransporteinrichtung (17, 18) höher als die Transportgeschwindigkeit der Gallerte bzw. des Käsebruchs im Schneidabschnitt (8) ist, wobei insbesondere
- die am in Transportrichtung vorderen Ende des Schneidabschnitts (8) gelegene Entnahmevorrichtung (17, 18),
- die am in Transportrichtung hinteren Ende des Schneidabschnitts (8) gelegene Einsetzvorrichtung (17, 18) sowie
- die im Bereich des Schneidabschnitts (8) vorgesehene Trennwandtransporteinrichtung (17, 18) zum außerhalb des Trogs (1) in Käsemassentransportrichtung erfolgenden Transport der Trennwände (6)
zu einer einzigen Station (17, 18) zusammengefaßt sind.

10. Vorrichtung nach einem der Ansprüche 7 bis 9,
**dadurch gekennzeichnet,**
**daß** der Weiterbearbeitungsabschnitt (9) mit einem Rührwerk und/oder einer Heiz- und/oder einer Kühleinrichtung ausgestattet ist, wobei insbesondere das Rührelement des Rührwerks beheizbar oder kühlbar ist.

11. Vorrichtung nach einem der Ansprüche 7 bis 10,
**dadurch gekennzeichnet,**
**daß** die Längserstreckung des Schneidabschnitts (8) zwischen 50 und 300 cm, insbesondere in etwa 150 cm beträgt, und/oder daß die Abmessung der Zellen in Troglängsrichtung jeweils ungefähr zwischen 60 und 100 cm beträgt.

## Claims

1. A method for the obtaining of cheese material from milk carried out in an elongate trough (1) comprising a continuously moving inner wall, in which at least the coagulation process takes place in cells which are separate from one another, moved in the longitudinal direction of the trough and follow one another, in which the jelly formed by the coagulation process is subsequently cut and in which after cutting at least one further working step is carried out with an effect on the cut jelly or the cheese curd, said working step taking place inside cells following one another in the longitudinal direction of the trough.

2. A method in accordance with claim 1, **characterised in that** the partition walls (6) separating the cells from one another have the same relative position with respect to the milk/jelly moved in the trough (1) before and after cutting; and/or **in that** all cell divisions present before cutting are maintained during the further working steps.

3. A method in accordance with any one of the preceding claims, **characterised in that** all cell divisions present before cutting are also maintained during cutting, with cutting tools (13) being moved out of the trough (1), in particular being pivoted out of the trough, in particular before partition walls (6) pass by said cutting tools (13).

4. A method in accordance with claim 1 or claim 2, **characterised in that** the cell divisions present before cutting are removed during cutting, with in particular the cell divisions between two, three or four following cells being removed during cutting.

5. A method in accordance with claim 4, **characterised in that** the cutting procedure takes place continuously; and/or **in that** at least the cutting tools (19) effecting the cuts in the longitudinal direction of the trough remain in the trough (1) during the complete obtaining of the cheese material.

6. A method in accordance with any one of the preceding claims, **characterised in that** a stirring, heating and/or cooling of the cheese curd takes place during the further working step; and/or **in that** the discharge of the cheese material takes place via a discharge pipe (16).

7. An apparatus for continuously obtaining cheese material from milk, comprising an elongate trough (1) having a continuously moving inner wall, which is divided by means of partition walls (6) into cells which are separate from one another, are moved in the longitudinal direction of the trough and follow one another, with at least one filling section (3), one coagulation section (7), one cutting section (8), one further processing section (9) and one discharge section (4) following one another in the longitudinal direction of the trough, with a removal apparatus (10) for partition walls (6) transported through the further processing section (9) being provided at the rear end of the further processing section (9) in the direction of transport.

8. An apparatus in accordance with claim 7, **characterised in that** a removal apparatus (17, 18) for partition walls (6) is provided at the front end of the cutting section (8) in the direction of transport and that an insertion apparatus (17, 18) for partition walls (6) is provided at the rear end of the cutting section (8) in the direction of transport; and/or **in that** a partition wall transportation apparatus (17, 18) is provided in the region of the cutting section (8) for the transport of the partition walls (6) outside the trough (1) in the direction of transport of the cheese material.

9. An apparatus in accordance with claim 8, **characterised in that** the transport speed of the partition wall transportation apparatus (17, 18) is higher than the transport speed of the jelly or cheese curd in the cutting section (8), with in particular
- the removal apparatus (17, 18) disposed at the front end of the cutting section (8) in the direction of transport,
- the insertion apparatus (17, 18) disposed at the rear end of the cutting section (8) in the direction of transport, and
- the partition wall transportation apparatus (17, 18) provided in the region of the cutting section (8) for the transport of the partition walls (6) outside the trough (1) in the direction of transport of the cheese material
being combined into a single station (17, 18).

10. An apparatus in accordance with any one of claims 7 to 9, **characterised in that** the further processing section (9) is fitted with a mixer and/or a heater and/or a cooler, with in particular the stirring member of the mixer being heatable or coolable.

11. An apparatus in accordance with any one of claims 7 to 10, **characterised in that** the longitudinal extent of the cutting section (8) amounts to between 50 and 300 cm, in particular to approximately 150 cm; and/or **in that** the dimensions of the cells in the longitudinal direction of the trough each amount to approximately between 60 and 100 cm.

## Revendications

1. Procédé destiné à la préparation de caillé à partir du lait dans une cuve allongée (1) munie d'une paroi intérieure se déplaçant en continu, dans lequel au moins le processus de coagulation est effectué dans des cellules successives, séparées les unes des autres; qui sont acheminées dans le sens longitudinal de la cuve, la masse gélatineuse obtenue par le processus de coagulation est ensuite coupée et, après la coupe, la masse gélatineuse coupée ou les brisures de caillé sont soumises au moins à une étape de traitement supplémentaire, qui est effectuée à l'intérieur des cellules disposées les unes derrière les autres dans le sens longitudinal de la cuve.

2. Procédé selon la revendication 1, **caractérisé en ce que** les cloisons (6) qui séparent les cellules les unes des autres sont disposées avant et après le processus de coupe dans la même position relative par rapport au lait/masse gélatineuse acheminé(e) dans la cuve (1) et/ou **en ce que**, pendant l'étape de traitement consécutive, toutes les séparations en cellules existant avant la coupe sont maintenues.

3. Procédé selon l'une quelconque des revendications précédentes, **caractérisé en ce que** toutes les séparations en cellules existant avant la coupe sont également maintenues pendant le processus de coupe, les outils de coupe (13) étant déplacés hors de la cuve (1), notamment basculés hors de ladite cuve, avant le passage des cloisons (6) au niveau desdits outils de coupe.

4. Procédé selon l'une des revendications 1 ou 2, **caractérisé en ce que** des séparations en cellules existant avant la coupe sont supprimées pendant le processus de coupe, les séparations étant supprimées entre deux, trois ou quatre cellules successives, en particulier pendant le processus de coupe.

5. Procédé selon la revendication 4, **caractérisé en ce que** le processus de coupe est effectué en continu et/ou **en ce qu'**au moins les outils de coupe (19) exécutant la coupe dans le sens longitudinal de la cuve sont maintenus dans la cuve (1) pendant toute la préparation du caillé.

6. Procédé selon l'une quelconque des revendications précédentes, **caractérisé en ce que** l'étape de traitement supplémentaire est une étape de brassage, de chauffage et/ou de refroidissement des brisures de caillé, et/ou **en ce que** le caillé est évacué par l'intermédiaire d'un tube de déversement (16).

7. Dispositif destiné à la préparation de caillé à partir du lait, comprenant une cuve (1) allongée munie d'une paroi intérieure se déplaçant en continu, qui est divisée par des cloisons (6) en cellules successives, séparées les unes des autres et acheminées dans le sens longitudinal de la cuve, dans lequel dispositif se succèdent dans le sens longitudinal de la cuve au moins une section de remplissage (3), une section de coagulation (7), une section de coupe (8), une section de traitement ultérieur (9) et une section de déversement (4), un dispositif de prélèvement (10) des cloisons (6) transportées à travers la section de traitement ultérieur (9) étant prévu à l'extrémité arrière de la section de traitement ultérieur (9), par référence au sens de transport.

8. Dispositif selon la revendication 7, **caractérisé en ce qu'**il est prévu un dispositif de prélèvement (17, 18) des cloisons (6) à l'extrémité avant de la section de coupe (8), par référence au sens de transport, et un dispositif de montage (17, 18) desdites cloisons à l'extrémité arrière de la section de coupe (8), par référence au sens de transport, et/ou **en ce que**, dans la zone de la section de coupe (8), il est prévu un dispositif de transport des cloisons (17, 18) destiné à transporter les cloisons (6) en dehors de la cuve (1) dans le sens de transport du caillé.

9. Dispositif selon la revendication 8, **caractérisé en ce que** la vitesse de transport du dispositif de transport des cloisons (17, 18) est supérieure à la vitesse d'acheminement de la masse gélatineuse ou des brisures de caillé dans la section de coupe (8), sachant que notamment
- le dispositif de prélèvement (17, 18) monté à l'extrémité avant de la section de coupe (8), par référence au sens de transport,
- le dispositif de montage (17, 18) monté à l'extrémité arrière de la section de coupe (8), par référence au sens de transport,
- le dispositif de transport des cloisons (17, 18) prévu dans la zone de la section de coupe (8) et destiné à transporter les cloisons (6) en dehors de la cuve (1) dans le sens d'acheminement du caillé,
sont regroupés pour former un seul poste (17, 18).

10. Dispositif selon l'une quelconque des revendications 7 à 9, **caractérisé en ce que** la section de traitement ultérieur (9) est équipée d'un mélangeur-agitateur et/ou d'un dispositif de chauffage et/ou d'un dispositif de refroidissement, l'élément d'agitation du mélangeur-agitateur pouvant notamment être chauffé ou refroidi.

11. Dispositif selon l'une quelconque des revendications 7 à 10, **caractérisé en ce que** la dimension dans le sens longitudinal de la section de coupe (8) est comprise entre 50 et 300 cm, en particulier elle est égale à 150 cm environ, et/ou **en ce que** la dimension de chacune des cellules dans le sens longitudinal de la cuve est comprise entre 60 et 100 cm environ.
